# EUROPEAN PATENT APPLICATION

(11) **EP 4 830 531 A1**
(43) Date of publication of application: **28.10.2026**
(21) Application number: 24907550.8
(22) Date of filing: 20.12.2024
(51) Int. Cl.: A23L 2/00, A23L 2/38, A23L 2/52

(54) **PACKAGED CARBONATED BEVERAGE, METHOD FOR PRODUCING SAME, AND METHOD FOR SUPPRESSING GAS LOSS IN PACKAGED CARBONATED BEVERAGE**

(30) Priority: 22.12.2023 JP 2023217358
(71) Applicant: KIRIN HOLDINGS KABUSHIKI KAISHA, Nakano-ku, Tokyo 164-0001 (JP)
(72) Inventor: GOTO, Takeaki, Tokyo 164-0001 (JP); KUMATA, Noriko, Tokyo 164-0001 (JP); YOTSUMOTO, Yuuko, Tokyo 164-0001 (JP)
(74) Representative: Hoffmann Eitle
(86) International application number: PCT/JP2024/045210
(87) International publication number: WO 2025/135167

(57) **Abstract**

A packaged carbonated beverage contains dead bacteria of beneficial bacteria in a concentration of 5 × 10⁸/L or more and has a gas pressure of not less than 0.05 MPa and not more than 0.5 MPa.

## Description

### TECHNICAL FIELD

The present disclosure relates to a packaged carbonated beverage, a method of producing the same, and a method of restricting gas loss of a packaged carbonated beverage.

### BACKGROUND

Carbonated beverages are widely loved as beverages with which a refreshing feeling due to the stimulation of carbon dioxide gas can be enjoyed upon consumption. The flavor of a carbonated beverage is generally designed under the assumption of stimulation by carbon dioxide gas. However, conventional packaged carbonated beverages have experienced a problem that once a container thereof is opened, the amount of carbon dioxide gas contained in the beverage decreases gradually over time, and so called "gas loss" occurs, resulting in weakening of the stimulation due to carbon dioxide gas described above. In particular, gas loss is likely to occur when a carbonated beverage is packaged in a large container due to the longer time taken for consumption of the beverage. A carbonated beverage from which gas has been lost suffers not only from reduction of refreshing feeling, but also from a problem of altered flavor, such as increased sweetness, due to reduced stimulation by carbon dioxide gas. Various techniques are being studied in order to restrict this gas loss.

As one example, Patent Literature (PTL) 1 proposes suppressing gas loss of a packaged carbonated beverage by using an emulsifier that includes a polyglycerin fatty acid ester together with a fragrance/flavoring that includes a specific hydrophobic ingredient.

As another example, PTL 2 discloses that loss of carbon dioxide gas can be suppressed through the inclusion of a specific polyphenol and a specific sweetener.

As yet another example, PTL 3 discloses that the inclusion of indigestible dextrin in a carbonated beverage facilitates loss of carbon dioxide gas in the beverage and that inclusion of pectin or collagen in the carbonated beverage can suppress loss of carbon dioxide gas.

### CITATION LIST

### Patent Literature

PTL 1: JP 2017-012016 A
PTL 2: JP 2017-123788 A
PTL 3: JP 2021-153412 A

### SUMMARY

### (Technical Problem)

However, the methods described in PTL 1 to 3 are limited in that they involve the use of a specific fragrance/flavoring, sweetener, or additive and can, therefore, only be adopted in beverages having a flavor that is compatible therewith. There is also room for further improvement of the conventional methods described above with regard to suppressing gas loss of a carbonated beverage.

Accordingly, an object of the present disclosure is to provide a packaged carbonated beverage having restricted gas loss.

### (Solution to Problem)

The inventors conducted diligent studies with the aim of solving the problems described above. The inventors made a new discovery that gas loss of a packaged carbonated beverage can be restricted by adding dead bacteria of beneficial bacteria to the packaged carbonated beverage in not less than a specific concentration, and, in this manner, completed the present disclosure.

Specifically, with the aim of advantageously solving the problems described above, [1] a presently disclosed packaged carbonated beverage comprises dead bacteria of beneficial bacteria, wherein a dead bacteria concentration of the beneficial bacteria is 5 × 10⁸/L or more, and gas pressure is not less than 0.05 MPa and not more than 0.5 MPa. When the concentration of dead beneficial bacteria is not less than the lower limit set forth above in the gas pressure range set forth above, gas loss of the packaged carbonated beverage can be restricted.

Note that the "gas pressure" of a packaged beverage referred to in the present specification is calculated through conversion from the concentration of dissolved carbon dioxide in liquid of the packaged beverage at 20°C and can be measured according to a method described in the EXAMPLES section of the present specification.

[2] The packaged carbonated beverage according to the foregoing [1] preferably has gas loss restriction functionality.

[3] In the packaged carbonated beverage according to the foregoing [1] or [2], the dead bacteria concentration of the beneficial bacteria is preferably 10,000 × 10⁸/L or less. When the dead bacteria concentration of the beneficial bacteria is not more than the upper limit set forth above, alteration of the flavor of the beverage by a characteristic aromatic taste originating from the beneficial bacteria can be suppressed.

[4] In the packaged carbonated beverage according to any one of the foregoing [1] to [3], the beneficial bacteria are preferably one type or two or more types selected from the group consisting of Lactobacillus bacteria and Lactococcus bacteria.

**[5]** In the packaged carbonated beverage according to any one of the foregoing [1] to [4], the beneficial bacteria are preferably one type or two or more types selected from the group consisting of Lactobacillus rhamnosus CRL1505, Lactococcus lactis subsp. lactis JCM5805, and Lactobacillus paracasei KW3110.

[6] The packaged carbonated beverage according to any one of the foregoing [1] to [5] preferably has a pH when containing carbon dioxide gas of not lower than 1.0 and not higher than 5.5. When the pH is within the range set forth above, gas loss of the packaged carbonated beverage can be even further restricted.

Note that the "pH when containing carbon dioxide gas" of a packaged beverage referred to in the present specification means the pH under gas pressure (i.e., the pH in a state in which carbon dioxide is included). The pH of a packaged beverage when containing carbon dioxide gas can be measured according to a method described in the EXAMPLES section of the present specification.

[7] The packaged carbonated beverage according to any one of the foregoing [1] to [6] is preferably a packaged carbonated beverage that is packaged in a container having an internal volume of not less than 100 mL/container and not more than 2,100 mL/container.

**[8]** In the packaged carbonated beverage according to any one of the foregoing [1] to [7], the container is preferably formed of a plastic material.

[9] Moreover, a presently disclosed method of producing a packaged carbonated beverage comprises: a blending step of blending dead bacteria of beneficial bacteria such as to give a dead bacteria concentration of 5 × 10⁸/L or more; and a carbon dioxide gas addition step of adding carbon dioxide gas to a blend obtained through the blending step such as to give a gas pressure of not less than 0.05 MPa and not more than 0.5 MPa. Through this production method, it is possible to provide a packaged carbonated beverage having restricted gas loss.

[10] Furthermore, a presently disclosed method of restricting gas loss of a packaged carbonated beverage comprises: a blending step of blending dead bacteria of beneficial bacteria such as to give a dead bacteria concentration of 5 × 10⁸/L or more; and a carbon dioxide gas addition step of adding carbon dioxide gas to a blend obtained through the blending step such as to give a gas pressure of not less than 0.05 MPa and not more than 0.5 MPa. Through this method of restricting gas loss, it is possible to provide a packaged carbonated beverage having restricted gas loss.

### (Advantageous Effect)

According to the present disclosure, it is possible to provide a packaged carbonated beverage having restricted gas loss.

### DETAILED DESCRIPTION

### (Packaged carbonated beverage)

The presently disclosed packaged carbonated beverage is a beverage that contains dead bacteria of beneficial bacteria. More specifically, features of the presently disclosed packaged carbonated beverage are that a dead bacteria concentration of the beneficial bacteria is 5 × 10⁸/L or more and that a gas pressure of the beverage is not less than 0.05 MPa and not more than 0.5 MPa. Moreover, the presently disclosed beverage has gas loss restriction functionality and can give a stimulating taste due to carbon dioxide gas even when drunk in a state in which a certain period of time has elapsed after opening thereof. Furthermore, since gas loss restriction functionality is imparted through addition of dead bacteria of beneficial bacteria, the expression of benefits attributed to the beneficial bacteria such as digestive health benefits and health promotion benefits can also be expected.

The term "packaged carbonated beverage" as used in the present disclosure refers to a packaged beverage into which carbon dioxide gas has been injected. For example, the carbonated beverage may be a sweetened carbonated beverage or an unsweetened carbonated beverage. The sweetened carbonated beverage may be lemon/lime soda, ramune, cola, an energy beverage, a fruit juice-containing carbonated beverage, or the like, for example, without any specific limitations. The unsweetened carbonated beverage may be a sparkling alcoholic beverage obtained through injection of carbon dioxide gas into any of various of types of non-sparkling alcoholic beverages, a beer-flavored beverage, carbonated water that does not contain a sweetener, or the like, for example, without any specific limitations. Moreover, the carbonated beverage is not limited to a beverage into which carbon dioxide has been artificially injected and may alternatively be natural carbonated water resulting from dissolution of carbon dioxide gas in groundwater or carbonated water resulting from dissolution of carbon dioxide gas that has been produced by microorganisms in a fermentation process.

### <Dead bacteria of beneficial bacteria>

In the present disclosure, dead bacteria of beneficial bacteria are used. No specific limitations are placed on the beneficial bacteria, and examples thereof include Oenococcus bacteria, Bifidobacterium bacteria, Weissella bacteria, Tetragenococcus bacteria, Lactococcus bacteria, Leuconostoc bacteria, Pediococcus bacteria, Streptococcus bacteria, Enterococcus bacteria, Lactobacillus bacteria, acetic acid bacteria, and Bacillus bacteria.

Note that the term "Lactobacillus bacteria" as used in the present disclosure encompasses bacteria that were classified as Lactobacillus prior to the Lactobacillus reclassification. For example, "Lactobacillus bacteria" encompasses bacteria that, in accompaniment to the Lactobacillus reclassification, were newly classified as Acetilactobacillus, Agrilactobacillus, Amylolactobacillus, Apilactobacillus, Bombilactobacillus, Companilactobacillus, Dellaglioa, Fructilactobacillus, Furfurilactobacillus, Holzapfelia, Lacticaseibacillus, Lactiplantibacillus, Lapidilactobacillus, Latilactobacillus, Lentilactobacillus, Levilactobacillus, Ligilactobacillus, Limosilactobacillus, Liquorilactobacillus, Loigolactobacillus, Paralactobacillus, Paucilactobacillus, Schleiferilactobacillus, Secundilactobacillus, and so forth.

Of the examples given above, Oenococcus bacteria, Bifidobacterium bacteria, Lentilactobacillus bacteria, Weissella bacteria, Tetragenococcus bacteria, Lactococcus bacteria, Leuconostoc bacteria, Pediococcus bacteria, Enterococcus bacteria, Lactobacillus bacteria, and Lactiplantibacillus bacteria are preferable as the bacteria. Moreover, it is more preferable that one type or two or more types selected from the group consisting of Lactobacillus bacteria and Lactococcus bacteria are included as the bacteria.

The Oenococcus bacteria mentioned above may be Oenococcus oeni or the like, for example. Specific examples of Oenococcus bacteria include Oenococcus oeni JCM6125.

The Bifidobacterium bacteria mentioned above may be Bifidobacterium animalis subsp. lactis, Bifidobacterium longum subsp. infantis, or the like, for example. Specific examples of Bifidobacterium bacteria include Bifidobacterium animalis subsp. lactis JCM10602 and Bifidobacterium longum subsp. infantis JCM1222.

The Weissella bacteria mentioned above may be Weissella paramesenteroides, Weissella viridescens, or the like, for example. Specific examples of Weissella bacteria include Weissella paramesenteroides JCM9890 and Weissella viridescens JCM1174.

The Tetragenococcus bacteria mentioned above may be Tetragenococcus halophilus or the like, for example. Specific examples of Tetragenococcus bacteria include Tetragenococcus halophilus NRIC0098.

The Lactococcus bacteria mentioned above may be Lactococcus lactis, Lactococcus lactis subsp. lactis, Lactococcus garvieae, Lactococcus lactis subsp. cremoris, Lactococcus lactis subsp. hordniae, Lactococcus plantarum, or the like, for example.

Specific examples of Lactococcus bacteria include Lactococcus lactis subsp. lactis JCM5805, Lactococcus lactis subsp. lactis NBRC12007, Lactococcus lactis subsp. lactis NRIC1150, Lactococcus lactis subsp. lactis JCM20101, Lactococcus lactis subsp. lactis JCM7638, Lactococcus lactis subsp. lactis ATCC11454, Lactococcus garvieae NBRC100934, Lactococcus lactis subsp. cremoris JCM16167, Lactococcus lactis subsp. cremoris NBRC100676, Lactococcus lactis subsp. hordniae JCM1180, Lactococcus lactis subsp. hordniae JCM11040, and Lactococcus plantarum JCM11056.

The Leuconostoc bacteria mentioned above may be Leuconostoc carnosum, Leuconostoc lactis, or the like, for example. Specific examples of Leuconostoc bacteria include Leuconostoc carnosum JCM9695 and Leuconostoc lactis NBRC12455.

The Pediococcus bacteria mentioned above may be Pediococcus acidilactici, Pediococcus pentosaceus, Pediococcus cellicola, Pediococcus claussenii, Pediococcus damnosus, Pediococcus ethanolidurans, Pediococcus inopinatus, Pediococcus parvulus, Pediococcus stilesii, or the like, for example. Specific examples of Pediococcus bacteria include Pediococcus acidilactici JCM8797, Pediococcus acidilactici K15, and Pediococcus damnosus JCM5886.

The Streptococcus bacteria mentioned above may be Streptococcus thermophilus or the like, for example. Specific examples of Streptococcus bacteria include Streptococcus thermophilus SBC8781.

The Enterococcus bacteria mentioned above may be Enterococcus alcedinis or the like, for example.

The Lactobacillus bacteria mentioned above may be Lactobacillus paracasei, Lactobacillus delbrueckii, Lactobacillus acidophilus, Lactobacillus casei, Lactobacillus fructivorans, Lactobacillus hilgardii, Lactobacillus rhamnosus, Lactobacillus gasseri, Lactobacillus acidophilus, Lactobacillus bulgaricus, Lactobacillus parakefiri, Lactobacillus plantarum, or Lactobacillus pentosus, for example.

Specific examples of Lactobacillus bacteria include Lactobacillus paracasei KW3110, Lactobacillus paracasei MCC1849, Lactobacillus paracasei K71, Lactobacillus rhamnosus GG, Lactobacillus rhamnosus CRL1505, Lactobacillus gasseri SBT2055, Lactobacillus acidophilus L-92, Lactobacillus bulgaricus OLL1073R-1, Lactobacillus parakefiri (Lentilactobacillus parakefiri in new classification) JCM8573, Lactobacillus plantarum (Lactiplantibacillus plantarum in new classification) L-137, and Lactobacillus pentosus (Lactiplantibacillus pentosus in new classification) ONRICb0240.

The acetic acid bacteria mentioned above may be Gluconacetobacter bacteria, Acetobacter bacteria, Gluconobacter bacteria, or the like, for example, without any specific limitations, are preferably Gluconacetobacter bacteria, are more preferably Gluconacetobacter hansenii, and are even more preferably Gluconacetobacter hansenii GK-1.

The Bacillus bacteria mentioned above may be Bacillus coagulans or the like, for example, without any specific limitations. Specific examples of Bacillus bacteria include Bacillus coagulans SANK70258 strain.

Of the examples given above, the inclusion of one type or two or more types selected from the group consisting of Lactobacillus rhamnosus CRL 1505, Lactococcus lactis subsp. lactis JCM5805, and Lactobacillus paracasei KW3110 as the beneficial bacteria is preferable.

In the present disclosure, the dead bacteria of the beneficial bacteria may be a dry material or may be a non-dry material without any specific limitations, though a dry material is preferable from a viewpoint of storage stability of the dead beneficial bacteria. In particular, a dry powder of dead beneficial bacteria is preferable as the dead bacteria of the beneficial bacteria.

No specific limitations are placed on the method by which the dead bacteria of the beneficial bacteria are prepared. For example, a method in which a culture medium where bacteria have been cultured is sterilized and then filtration and centrifugal separation, or the like, are performed to collect bacterial cells or a method in which bacterial cells are collected by filtration and centrifugal separation, or the like, from a culture medium where bacteria have been cultured and are then sterilized can be adopted. Note that among beneficial bacteria, particularly lactic acid bacteria, for example, can be cultured using a lactic acid bacteria culture medium that is commonly known to those skilled in the art such as MRS (de Man-Rogosa-Sharpe) culture medium, which contains glucose, hydrolyzed protein, and yeast extract. In general, culturing can be performed under anaerobic conditions with a culture temperature of 30°C to 37°C and a culture period of 2 days to 3 days.

In addition, the bacterial cells that have been collected after culturing can be further subjected to drying and pulverization as necessary. Note that no specific limitations are placed on the means of sterilization, and common means of killing bacteria such as not only heating, but also UV irradiation, γ-ray irradiation, and so forth can be adopted.

The concentration of the dead beneficial bacteria contained in the presently disclosed packaged carbonated beverage is required to be 5 × 10⁸/L or more, is preferably 10 × 10⁸/L or more, more preferably 20 × 10⁸/L or more, and even more preferably 50 × 10⁸/L or more, and is preferably 10,000 × 10⁸/L or less, more preferably 5,000 × 10⁸/L or less, even more preferably 1,000 × 10⁸/L or less, even more preferably 900 × 10⁸/L or less, even more preferably 800 × 10⁸/L or less, even more preferably 750 × 10⁸/L or less, even more preferably 500 × 10⁸/L or less, further preferably 300 × 10⁸/L or less, and particularly preferably 200 × 10⁸/L or less. When the concentration of the dead beneficial bacteria is not less than any of the lower limits set forth above, gas loss restriction functionality of the packaged carbonated beverage can be sufficiently increased. Moreover, when the concentration of dead beneficial bacteria is not more than any of the upper limits set forth above, alteration of the flavor of the beverage caused by a characteristic aromatic taste originating from the beneficial bacteria can be suppressed.

The concentration of the dead beneficial bacteria contained in the beverage can be controlled through adjustment of the additive amount of the dead beneficial bacteria that is blended in the beverage. Furthermore, the concentration of the dead beneficial bacteria contained in the beverage can be measured by a commonly known bacterial count measurement method without any specific limitations, and examples thereof include direct microscopy, the electric sensing zone method, the PCR method, and flow cytometry, with flow cytometry being preferable.

### <Gas pressure>

The gas pressure of the presently disclosed packaged carbonated beverage is required to be 0.05 MPa or more, is preferably 0.1 MPa or more, and more preferably 0.2 MPa or more, is required to be 0.5 MPa or less, and is preferably 0.4 MPa or less. When the gas pressure of the packaged carbonated beverage is within any of the ranges set forth above, gas loss restriction functionality of the packaged carbonated beverage can be sufficiently increased.

When a value of "dead bacteria concentration of beneficial bacteria (×10⁸/L)/gas pressure (MPa)" for a relationship between the gas pressure and the concentration of the dead beneficial bacteria in the presently disclosed packaged carbonated beverage is taken to be A, A is preferably 15 or more, more preferably 20 or more, even more preferably 100 or more, and further preferably 300 or more, and is preferably 50,000 or less, more preferably 40,000 or less, and even more preferably 10,000 or less. When A is within any of the ranges set forth above, gas loss restriction functionality of the packaged carbonated beverage can be even further increased.

### <Other ingredients>

The presently disclosed beverage may contain one type or two or more types of additives selected from the group consisting of acidulants, fragrances and flavorings, colorings, sweeteners, preservatives, thickeners, stabilizers, emulsifiers, dietary fiber, bittering agents, antioxidants, pH modifiers, vitamins, nutritional fortifiers, umami ingredients, dietary fiber, extracts, solvents, minerals, water-soluble functional ingredients, and lipid-soluble functional ingredients within a range not interfering with the effects according to the present disclosure. No specific limitations are placed on the additives described above, and typically used examples thereof can be adopted. Specifically, acesulfame K, stevia, and sucralose can be adopted as sweeteners, citric acid can be adopted as an acidulant, soybean polysaccharide and pectin can be adopted as stabilizers, and sodium, potassium, magnesium, and calcium can be adopted as minerals, for example.

Of the other ingredients listed above, the inclusion of citric acid in the packaged carbonated beverage is preferable. The concentration of the citric acid is not specifically limited so long as the pH of the packaged carbonate beverage can be adjusted to within any of the preferable ranges set forth below, but is preferably 0.0001 mass% or more, more preferably 0.001 mass% or more, and even more preferably 0.005 mass% or more, for example, and is preferably 1 mass% or less, more preferably 0.5 mass% or less, even more preferably 0.1 mass% or less, further preferably 0.05 mass% or less, and particularly preferably 0.01 mass% or less, for example. When the citric acid concentration is within any of the ranges set forth above, gas loss restriction functionality of the packaged carbonated beverage can be even further increased.

### <pH of packaged carbonated beverage when containing carbon dioxide gas>

The pH of the packaged carbonated beverage when containing carbon dioxide gas means the pH under gas pressure (i.e., the pH in a state in which carbon dioxide is included). The pH of the packaged beverage under gas pressure when containing carbon dioxide gas is preferably 1.0 or higher, more preferably 1.5 or higher, even more preferably 2.0 or higher, and particularly preferably 2.5 or higher, and is preferably 5.5 or lower, more preferably 5.0 or lower, and even more preferably 4.5 or lower. When the pH under gas pressure of the packaged beverage is not lower than any of the lower limits set forth above, gas loss of the packaged carbonated beverage can be further restricted, and excessive sourness can also be suppressed. When the pH under gas pressure of the packaged beverage is not higher than any of the upper limits set forth above, an unpleasant off-taste of the packaged carbonated beverage can be suppressed.

### <Container>

A container of the presently disclosed packaged beverage may be a container formed of a plastic material (resin bottle) such as a PET bottle, a polypropylene bottle, or a polyvinyl chloride bottle, a glass bottle container, a can container, or the like. The volume of the container is not specifically limited but may be 100 mL/container or more, and preferably 350 mL/container or more, for example, and may be 2,100 mL/container or less, and preferably 1,600 mL/container or less, for example. More specifically, the volume of a container that is formed of a plastic material is preferably 150 mL/container or more, more preferably 310 mL/container or more, even more preferably 360 mL/container or more, and particularly preferably 400 mL/container or more, and is preferably 1,300 mL/container or less, more preferably 1,200 mL/container or less, even more preferably 950 mL/container or less, and particularly preferably 700 mL/container or less. Moreover, the volume of a glass bottle container is preferably 150 mL/container or more, and more preferably 430 mL/container or more, and is preferably 1,300 mL/container or less. Furthermore, the volume of a can container is preferably 150 mL/container or more, and more preferably 260 mL/container or more, and is preferably 1,250 mL/container or less, more preferably 900 mL/container or less, even more preferably 700 mL/container or less, and particularly preferably 400 mL/container or less.

### (Method of producing packaged carbonated beverage)

A feature of the presently disclosed method of producing a packaged carbonated beverage is the inclusion of a blending step of blending dead bacteria of beneficial bacteria such as to give a dead bacteria concentration of 5 × 10⁸/L or more and a carbon dioxide gas addition step of adding carbon dioxide gas to a blend obtained through the blending step such as to give a gas pressure of not less than 0.05 MPa and not more than 0.5 MPa. No specific limitations are placed on the presently disclosed method of producing a packaged carbonated beverage so long as it includes the specific blending step and carbon dioxide gas addition step described above. In other words, production can be performed according to a conventional method of producing a beverage that is commonly known so long as the blending step and carbon dioxide gas addition step described above are included.

The blending step of blending dead bacteria of beneficial bacteria such as to give a dead bacteria concentration of 5 × 10⁸/L or more may, for example, be a step of adding an optional solvent such as water and other optional ingredients into a mixing tank and adding dead bacteria of beneficial bacteria thereto in a proportion of 5 × 10⁸/L or more. Alternatively, the aforementioned blending step may be a step of simultaneously adding dead bacteria of beneficial bacteria and an optional solvent into a mixing tank. The format of addition, order of blending, and so forth are of course not limited to configurations described above.

The carbon dioxide gas addition step of adding carbon dioxide gas to a blend obtained through the blending step such as to give a gas pressure of not less than 0.05 MPa and not more than 0.5 MPa may be a step of using a carbonator to accommodate a blend obtained as described above and then inject and dissolve carbon dioxide gas such as to give a specific gas pressure.

The presently disclosed packaged carbonated beverage can be produced by loading a carbonated beverage that has been obtained through the carbon dioxide gas addition step into a container such as any of those listed above and then sealing the container according to a known method.

### (Method of restricting gas loss of packaged carbonated beverage)

No specific limitations are placed on the presently disclosed method of restricting gas loss of a packaged carbonated beverage so long as it includes a blending step of blending dead bacteria of beneficial bacteria such as to give a dead bacteria concentration of 5 × 10⁸/L or more and a carbon dioxide gas addition step of adding carbon dioxide gas to a blend obtained through the blending step such as to give a gas pressure of not less than 0.05 MPa and not more than 0.5 MPa.

The blending step and the carbon dioxide gas addition step can be any of the same steps as for the steps described in relation to the presently disclosed method of producing a packaged carbonated beverage.

### EXAMPLES

The following provides a more specific description of the present disclosure based on illustrative tests. However, the present disclosure is not limited by matter described below.

Samples according to test groups described below were subjected to various measurements and evaluations by the following methods.

### (Physical property measurement)

### <Gas pressure loss ratio measurement method>

A gas pressure loss ratio of a carbonated beverage sample of each test group described below was determined by the following method using a packaged beverage analyzer PBA (equipped with a filling device PFD, a carbon dioxide concentration meter CarboQC ME, a pH meter MEASURING MODULE pH3201, and a density meter DMA4501) (produced by Anton Paar).

First, the product temperature of a carbonated beverage sample in a container before opening was set to 20°C, and then the sample was left at rest for at least 72 hours to stabilize gas-liquid equilibrium in the sample. The rested sample was thoroughly agitated through up and down movement and was then analyzed using the measurement instrument to determine a gas pressure value before opening. On the other hand, a separate rested sample was gently opened, was left at rest for 1 hour at room temperature, and was then closed. After thoroughly agitating the sample through up and down movement and stabilizing gas-liquid equilibrium in the same manner, the sample was analyzed using the measurement instrument to determine a gas pressure value at 1 hour after opening. The gas pressure values before opening and at 1 hour after opening were used to determine a gas pressure loss ratio of the carbonated beverage sample according to the following formula. 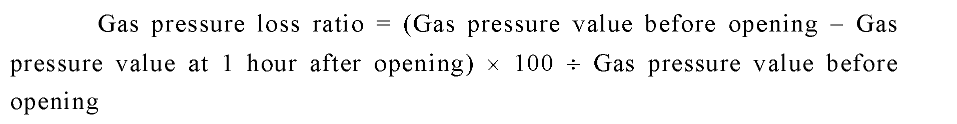 Gas pressure loss ratio = (Gas pressure value before opening - Gas pressure value at 1 hour after opening) × 100 ÷ Gas pressure value before opening

### <pH under gas pressure>

The pH under gas pressure was measured using the packaged beverage analyzer PBA described above.

### (Test 1) Influence of pH under gas pressure on gas pressure loss ratio

The following test was conducted in order to investigate the relationship between pH under gas pressure and gas pressure loss ratio in a carbonated beverage.

### <Sample preparation>

Carbonated beverage samples of test groups 1 to 4 were each prepared by loading water into a plastic container of 500 mL in volume, adding phosphoric acid or sodium hydroxide such as to give a pH under gas pressure indicated in Table 1, and performing carbonation (carbon dioxide gas injection/dissolution) using a carbonator such as to give a gas pressure before opening of 0.35 MPa at a liquid temperature of 20°C.

### <Measurements>

For carbonated beverage samples obtained in the test groups described above, the pH under gas pressure and the gas pressure loss ratio at 1 hour after opening were determined according to the pH under gas pressure measurement method and the gas pressure loss ratio measurement method described above. The gas pressure loss ratio was calculated by preparing carbonated beverage samples of each of the test groups described above with a sample number of N=6, performing measurement before opening and at 1 hour after opening with N=3 for each, and calculating the gas pressure loss ratio using an average value of the three samples. The results are shown in Table 1.

### (Test 2) Influence of concentration of dead beneficial bacteria on gas pressure loss ratio

The following test was conducted in order to investigate the relationship between the concentration of dead beneficial bacteria and gas pressure loss ratio in a carbonated beverage.

### <Sample preparation>

Carbonated beverage samples of test groups 5 to 11 were each prepared by loading water into a plastic container of 500 mL in volume, adding 0.005% of citric acid such as to give a pH under gas pressure of 3.5, also adding matcha powder (Aiya Co., Ltd.), killed yeast powder (Oriental Yeast Co., Ltd.), or rhamnosus dead bacteria (including one type or a plurality of types of Lactobacillus rhamnosus) such as to give a final concentration indicated in Table 2, and then performing carbonation of this sample using a carbonator such as to give a gas pressure before opening of 0.24 MPa at a liquid temperature of 20°C.

A rhamnosus dead bacteria aqueous solution of 100 × 10⁸/g in concentration that was prepared by diluting rhamnosus live bacteria powder (including one type or a plurality of types of Lactobacillus rhamnosus) of 3,500 × 10⁸/g in concentration by a factor of 35 using water and performing 60 minutes of sterilization at 80°C was used as the rhamnosus dead bacteria.

### <Measurements>

For carbonated beverage samples obtained in the test groups described above, the pH under gas pressure and the gas pressure loss ratio at 1 hour after opening were determined according to the pH under gas pressure measurement method and the gas pressure loss ratio measurement method described above. The gas pressure loss ratio was calculated by preparing carbonated beverage samples of each of the test groups described above with a sample number of N=6, performing measurement before opening and at 1 hour after opening with N=3 for each, and calculating the gas pressure loss ratio using an average value of the three samples. The results are shown in Table 2.

### (Test 3) Influence of concentration of dead beneficial bacteria on gas pressure loss ratio and relationship with gas pressure before opening

The following test was conducted in order to investigate the influence of the concentration of dead beneficial bacteria on gas pressure loss ratio and the relationship with gas pressure before opening.

### <Sample preparation>

Carbonated beverage samples of test groups 12 and 13 were each prepared by loading water into a plastic container of 500 mL in volume, adding rhamnosus dead bacteria such as to give a final concentration indicated in Table 3, and then performing carbonation of this sample using a carbonator such as to give a gas pressure before opening of 0.38 MPa at a liquid temperature of 20°C.

A rhamnosus dead bacteria aqueous solution of 100 × 10⁸/g in concentration that was prepared by diluting rhamnosus live bacteria powder (including one type or a plurality of types of Lactobacillus rhamnosus) of 3,500 × 10⁸/g in concentration by a factor of 35 using water and performing 60 minutes of sterilization at 80°C was used as the rhamnosus dead bacteria.

### <Measurements>

For carbonated beverage samples obtained in the test groups described above, the pH under gas pressure and the gas pressure loss ratio at 1 hour after opening were measured according to the pH under gas pressure measurement method and the gas pressure loss ratio measurement method described above. The pH under gas pressure and the gas pressure loss ratio were calculated by preparing carbonated beverage samples of each of the test groups described above with a sample number of N=6, performing measurement before opening and at 1 hour after opening with N=3 for each, and calculating the pH under gas pressure and the gas pressure loss ratio using an average value of the three samples. The results are shown in Table 3.

### (Test 4) Influence of dead beneficial bacteria on gas pressure loss ratio in packaged carbonated beverage containing indigestible dextrin

The following test was conducted in order to investigate the influence of dead beneficial bacteria on gas pressure loss ratio in a packaged carbonated beverage containing indigestible dextrin.

### <Sample preparation>

Carbonated beverage samples of test groups 14 and 15 were each prepared by loading water into a plastic container of 500 mL in volume, blending 1.1% of indigestible dextrin therewith, adding 0.005% of citric acid such as to give a pH under gas pressure of 3.5, also adding rhamnosus dead bacteria such as to give a final concentration indicated in Table 4, and then performing carbonation of this sample using a carbonator such as to give a gas pressure before opening of 0.30 MPa at a liquid temperature of 20°C.

A rhamnosus dead bacteria aqueous solution of 100 × 10⁸/g in concentration that was prepared by diluting rhamnosus live bacteria powder (including one type or a plurality of types of Lactobacillus rhamnosus) of 3,500 × 10⁸/g in concentration by a factor of 35 using water and performing 60 minutes of sterilization at 80°C was used as the rhamnosus dead bacteria.

### <Measurements>

For carbonated beverage samples obtained in the test groups described above, the pH under gas pressure and the gas pressure loss ratio at 1 hour after opening were measured according to the pH under gas pressure measurement method and the gas pressure loss ratio measurement method described above. The gas pressure loss ratio was calculated by preparing carbonated beverage samples of each of the test groups described above with a sample number of N=6, performing measurement before opening and at 1 hour after opening with N=3 for each, and calculating the gas pressure loss ratio using an average value of the three samples. The results are shown in Table 4.

**[Table 1]**

| | | Units | Test group 1 | Test group 2 | Test group 3 | Test group 4 |
|---|---|---|---|---|---|---|
| Before opening | pH under gas pressure | - | 1.4 | 1.7 | 3.9 | 5.0 |
| | Gas pressure | MPa | 0.35 | 0.35 | 0.35 | 0.35 |
| Gas pressure loss ratio | | % | 29 | 17 | 14 | 17 |

**[Table 2]**

| | | Units | Test group 5 | Test group 6 | Test group 7 | Test group 8 | Test group 9 | Test group 10 | Test group 11 |
|---|---|---|---|---|---|---|---|---|---|
| Additive | | - | Not added | Matcha powder | Yeast | Rhamnosus | Rhamnosus | Rhamnosus | Rhamnosus |
| Concentration | | % | - | 0.0030 | 0.0030 | 0.0003 (10 × 10⁸/L) | 0.0030 (100 × 10⁸/L) | 0.0060 (200 × 10⁸/L) | **0.0240** (800 × 10⁸/L) |
| Before opening | pH under gas pressure | - | 3.5 | 3.5 | 3.5 | 3.5 | 3.5 | 3.5 | 3.5 |
| | Gas pressure | MPa | 0.24 | 0.24 | 0.24 | 0.24 | 0.24 | 0.24 | 0.24 |
| Bacteria concentration/ Gas pressure | | - | - | - | - | 42 | 417 | 833 | 3333 |
| Gas pressure loss ratio | | % | 32 | 47 | 36 | 18 | 15 | 17 | 26 |

**[Table 3]**

| | | Units | Test group 12 | Test group 13 |
|---|---|---|---|---|
| Additive | | - | Not added | Rhamnosus |
| Concentration | | % | - | 0.0003 (10 × 10⁸/L) |
| Before opening | pH under gas pressure | - | 4.1 | 4.1 |
| | Gas pressure | MPa | 0.38 | 0.38 |
| Bacteria concentration/ Gas pressure | | - | - | 26 |
| Gas pressure loss ratio | | % | 21 | 15 |

**[Table 4]**

| | | Units | Test group 14 | Test group 15 |
|---|---|---|---|---|
| Indigestible dextrin | | % | 1.1 | 1.1 |
| Additive | | - | Not added | Rhamnosus |
| Concentration | | % | - | 0.0030 (100 × 10⁸/L) |
| Before opening | pH under gas pressure | - | 3.5 | 3.5 |
| | Gas pressure | MPa | 0.30 | 0.30 |
| Bacteria concentration/ Gas pressure | | - | - | 333 |
| Gas pressure loss ratio | | % | 53 | 46 |

From Table 1, it is presumed that in the case of a carbonated beverage having a gas pressure before opening of not less than 0.05 MPa and not more than 0.5 MPa, an effect of suppressing a gas pressure loss ratio of the beverage after opening increases in accompaniment to increasing pH under gas pressure between a pH of 1.4 and a pH of 1.7 under gas pressure. It can also be seen from Table 1 that a gas pressure loss suppressing effect that is generally high is achieved within a range where the pH under gas pressure is from around 1.7 to 5.0.

It can be seen from Table 2 that the gas pressure loss ratio after opening was suppressed in test groups 8 to 11, which are carbonated beverage samples that contain 5 × 10⁸/L or more of dead beneficial bacteria and have a gas pressure before opening of not less than 0.05 MPa and not more than 0.5 MPa. It can also be seen upon comparison of test groups 8 to 11 with test groups 6 and 7 in which matcha powder or killed yeast was used as an additive that the effect of suppressing the gas pressure loss ratio described above is a specific effect achieved when dead beneficial bacteria are added.

It can be seen from Table 3 that in test group 13, which is a carbonated beverage sample that contains 5 × 10⁸/L or more of dead beneficial bacteria and has a gas pressure before opening of not less than 0.05 MPa and not more than 0.5 MPa, the gas pressure loss ratio after opening was suppressed even with a gas pressure before opening that was higher than in test 2.

It can be seen from Table 4 that in test group 15, which is a carbonated beverage sample that contains 100 × 10⁸/L of dead beneficial bacteria and has a gas pressure before opening of not less than 0.05 MPa and not more than 0.5 MPa, the gas pressure loss ratio after opening was suppressed even when the carbonated beverage contained indigestible dextrin.

### INDUSTRIAL APPLICABILITY

According to the present disclosure, it is possible to provide a packaged carbonated beverage having restricted gas loss.

## Claims

1. A packaged carbonated beverage comprising dead bacteria of beneficial bacteria, wherein
a dead bacteria concentration of the beneficial bacteria is 5 × 10⁸/L or more, and
gas pressure is not less than 0.05 MPa and not more than 0.5 MPa.

2. The packaged carbonated beverage according to claim 1, wherein the packaged carbonated beverage has gas loss restriction functionality.

3. The packaged carbonated beverage according to claim 1, wherein the dead bacteria concentration of the beneficial bacteria is 10,000 × 10⁸/L or less.

4. The packaged carbonated beverage according to claim 1, wherein the beneficial bacteria are one type or two or more types selected from the group consisting of Lactobacillus bacteria and Lactococcus bacteria.

5. The packaged carbonated beverage according to claim 1, wherein the beneficial bacteria are one type or two or more types selected from the group consisting of Lactobacillus rhamnosus CRL1505, Lactococcus lactis subsp. lactis JCM5805, and Lactobacillus paracasei KW3110.

6. The packaged carbonated beverage according to claim 1, wherein the packaged carbonated beverage has a pH when containing carbon dioxide gas of not lower than 1.0 and not higher than 5.5.

7. The packaged carbonated beverage according to claim 1, wherein the packaged carbonated beverage is packaged in a container having an internal volume of not less than 100 mL/container and not more than 2,100 mL/container.

8. The packaged carbonated beverage according to any one of claims 1 to 7, wherein a container of the packaged carbonated beverage is formed of a plastic material.

9. A method of producing a packaged carbonated beverage comprising:
a blending step of blending dead bacteria of beneficial bacteria such as to give a dead bacteria concentration of 5 × 10⁸/L or more; and
a carbon dioxide gas addition step of adding carbon dioxide gas to a blend obtained through the blending step such as to give a gas pressure of not less than 0.05 MPa and not more than 0.5 MPa.

10. A method of restricting gas loss of a packaged carbonated beverage comprising:
a blending step of blending dead bacteria of beneficial bacteria such as to give a dead bacteria concentration of 5 × 10⁸/L or more; and
a carbon dioxide gas addition step of adding carbon dioxide gas to a blend obtained through the blending step such as to give a gas pressure of not less than 0.05 MPa and not more than 0.5 MPa.
